(19) Europäisches Patentamt
European Patent Office
Office européen des brevets

(11) **EP 4 614 381 A1**

(12) **EUROPEAN PATENT APPLICATION**
published in accordance with Art. 153(4) EPC

(43) Date of publication:
**10.09.2025 Bulletin 2025/37**

(21) Application number: **24836301.2**

(22) Date of filing: **02.07.2024**

(51) International Patent Classification (IPC):
***G06F 30/20*** *(2020.01)* ***G06F 111/10*** *(2020.01)*
***G06F 113/24*** *(2020.01)* ***G06F 119/14*** *(2020.01)*

(52) Cooperative Patent Classification (CPC):
**G06F 30/20;** G06F 2111/10; G06F 2113/24;
G06F 2119/14

(86) International application number:
**PCT/KR2024/009319**

(87) International publication number:
**WO 2025/009853 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023 KR 20230085447**

(71) Applicant: **LG CHEM, LTD.**
**Seoul 07336 (KR)**

(72) Inventors:
- **HWANG, Seo Kyung**
**Daejeon 34122 (KR)**
- **MOON, Sung Nam**
**Daejeon 34122 (KR)**
- **IM, Dam Hyeok**
**Daejeon 34122 (KR)**
- **JUNG, Jin Mi**
**Daejeon 34122 (KR)**
- **CHOI, Jin Uk**
**Daejeon 34122 (KR)**
- **JEON, Sang Jin**
**Daejeon 34122 (KR)**

(74) Representative: **Hoffmann Eitle**
**Patent- und Rechtsanwälte PartmbB**
**Arabellastraße 30**
**81925 München (DE)**

(54) **SYSTEM AND METHOD FOR REVERSE ENGINEERING STRENGTH OF MULTI-LAYERED MATERIAL**

(57) The present technology relates to a system and method for reverse engineering the strength of multilayer materials and enables reverse engineering of multilayer materials without the need for manufacturing multilayer material specimens. Specifically, the present technology can derive the required properties of the amorphous layer (p) to achieve the target strength of the multilayer material.

【FIG. 3】

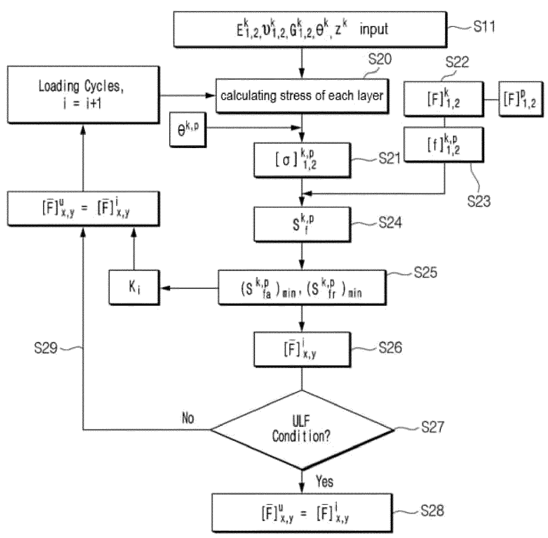


EP 4 614 381 A1

## Description

[Technical Field]

The present disclosure relates to a system and method for reverse engineering the strength of multilayer materials, more specifically multilayer films.

The present application claims the benefit of priority based on Korean Patent Application No. 10-2023-0085447, filed on July 03, 2023, and the entire contents of the Korean patent application are incorporated herein by reference.

[Background]

Polymer films refer to non-fibrous, plate-shaped plastic moldings with a thickness of 0.25 mm or less. The films are lightweight, exhibit good barrier properties, possess excellent transparency, and are relatively inexpensive. Consequently, they are utilized in nearly all fields including packaging materials, household items, electronic devices, automobiles, aircraft, etc.

Synthetic polymers such as polyethylene (PE), polypropylene (PP), polyvinyl chloride (PVC), and polyethylene terephthalate (PET) are processed as polymer films and used widely both domestically and internationally. Currently, numerous synthetic polymers are utilized as materials for polymer films, either alone or in blends.

However, there is a limitation in that a single film cannot satisfy complex properties required. To improve this, multilayer materials with a structure of two or more films stacked together are being developed.

In the process of developing multilayer materials, it has been found that the properties of the multilayer material, particularly the strength, cannot be calculated by simply summing the properties of individual films. Conventionally, to evaluate the properties, especially the strength of multilayer materials, multilayer material specimens of each combination were manufactured and subsequently evaluated. This method of manufacturing such multilayer material specimens has limitations in that not only requires time for manufacturing specimen but also has difficulties in evaluating all the various types and properties of the films.

Therefore, there is a need for a method capable of predicting the properties, particularly the strength, of multilayer materials without directly manufacturing the multilayer materials. In particular, there is a high need for a new conceptual system and method that can suggest design directions for certain layers to realize the target properties of multilayer materials.

[Summary]

[Technical Problem]

An object of the present disclosure is to provide a system or method capable of suggesting design directions for certain layers to achieve the target strength of multilayer materials during simulation, as described above.

[Technical Solution]

To achieve the aforementioned object, the present disclosure provides a system for reverse engineering the strength of multilayer materials. Specifically, the system for reverse engineering the strength of multilayer materials according to the present disclosure is a system for reverse engineering the strength of a multilayer material which stacked n layers including an amorphous layer (p).

In one exemplary example, the system for reverse engineering the strength of multilayer materials includes: an input part into which input values including the principal stress direction strength value ($[F]^k$) for each layer (k) except the amorphous layer (p), and the target strength value ($[\bar{F}]^t$) of the multilayer material are input; a control part for calculating the strength of the multilayer material by applying the input values entered into the input part; a display connected to the control part; and a storage part connected to the control part. Here, n is an integer of 2 or more, and p is an integer from 1 to n, and the sum of k and p is n.

Specifically, the control part derives a calculated strength value ($[\bar{F}]^u$) of the multilayer material using the principal stress direction strength value ($[F]^k$) of each layer (k) and an arbitrarily applied principal stress direction strength value ($[\bar{F}]^p$) of the amorphous layer (p), and determines whether the calculated strength value ($[\bar{F}]^u$) of the multilayer material falls within an error range of a predetermined target strength value ($[\bar{F}]^t$) of the multilayer material.

In one specific exemplary example, the input values entered into the input part with respect to each layer (k) except the amorphous layer (p), further include any one or more among one or more among elastic modulus ($E^k$), Poisson's ratio ($\upsilon^k$), shear modulus ($G^k$), thickness ($Z^k$), and lamination angle ($\theta^k$) of each layer (k); and any one or more among the total thickness (h) of the multilayer material.

In one specific exemplary example, the control part calculates the stress of each layer (k,p). It transforms the stress of each layer (k,p) into the principal direction stress ($[\sigma]^{k,p}$) of each layer (k,p) by applying the lamination angle ($\theta^{k,p}$) of each layer (k,p). The principal stress direction strength ($[F]^{k,p}$) of each layer (k,p) is configured as a strength determination parameter ($[f]^{k,p}$) for determining the strength of the multilayer material. The safety factor ($S^{k,p}$) of each layer (k,p) is calculated by combining the principal direction stress ($[\sigma]^{k,p}$) and the strength determination parameter ($[f]^{k,p}$) of each layer (k,p). Then, the calculated strength value ($[\bar{F}]^u$) of the multilayer material is derived from the calculated safety factor ($S^{k,p}$) of each layer (k,p).

Specifically, the control part calculates the force (/N) and moment (/M) of the multilayer material from the total thickness (h) of the multilayer material. It calculates the mid-plane strain ($\varepsilon^0$) and curvature (K) using the force (/N) and moment (/M) of the multilayer material and the inverse matrix ([a], [b], [c], [d]) of the stiffness matrix ([A], [B], [D]) of the multilayer material. The strain ($\varepsilon^{k,p}$) of each layer (k,p) is calculated using the mid-plane strain ($\varepsilon^0$), curvature (K), and thickness information ($Z^{k,p}$) of each layer (k,p). Then, the stress ($\sigma^{k,p}$) of each layer (k,p) is calculated using the strain ($\varepsilon^{k,p}{}_{x,y}$) of each layer (k,p) and the stiffness matrix ($[Q]^{k,p}$) of each layer (k,p).

In one exemplary example, deriving the calculated strength value ($[\bar{F}]^u$) of the multilayer material from the safety factor ($S^{k,p}$) of each layer (k,p) includes: extracting the smallest value ($(S^{k,p})_{min}$) among the calculated safety factors of each layer (k,p). If the extracted smallest value ($(S^{k,p})_{min}$) meets the predetermined ULF (Ultimate Laminate Failure) criteria, it is defined as the calculated strength value ($[\bar{F}]^u$) of the multilayer material.

In a specific exemplary example, in the process of determining whether the calculated strength value ($[\bar{F}]^u$) of the multilayer material falls within the error range of the target strength value ($[\bar{F}]^t$) of the multilayer material, if the calculated strength value ($[\bar{F}]^u$) of the multilayer material falls within the error range of the target strength value ($[\bar{F}]^t$) of the multilayer material, the principal stress direction strength value ($[F]^p$) of the amorphous layer is presented as an appropriate value.

In another specific exemplary example, in the process of determining whether the calculated strength value ($[\bar{F}]^u$) of the multilayer material falls within the error range of the target strength value ($[\bar{F}]^t$) of the multilayer material, if the calculated strength value ($[\bar{F}]^u$) of the multilayer material is outside the error range of the target strength value ($[\bar{F}]^t$) of the multilayer material, the calculated strength value ($[\bar{F}]^u$) of the multilayer material is recalculated.

For example, if the calculated strength value ($[\bar{F}]^u$) of the multilayer material is outside the error range of the target strength value ($[\bar{F}]^t$) of the multilayer material, and if the calculated strength value ($[\bar{F}]^u$) of the multilayer material is smaller than the target strength value ($[\bar{F}]^t$) of the multilayer material, the principal stress direction strength value ($[F]^p$) of the amorphous layer (p) is increased, and the calculated strength value ($[\bar{F}]^u$) of the multilayer material is recalculated. Alternatively, if the calculated strength value ($[\bar{F}]^u$) of the multilayer material is larger than the target strength value ($[\bar{F}]^t$) of the multilayer material, the principal stress direction strength value ($[F]^p$) of the amorphous layer (p) is decreased, and the calculated strength value ($[\bar{F}]^u$) of the multilayer material is recalculated.

In addition, the present disclosure provides a method for reverse engineering the strength of multilayer materials. The present disclosure is a method for reverse engineering the strength of a multilayer material wthich stacked n layers including an amorphous layer (p).

In one exemplary example, the method for reverse engineering the strength of the multilayer material according to the present disclosure includes: inputting input values including the principal stress direction strength value ($[F]^k$) for each layer (k) except the amorphous layer (p) and the target strength value ($[\bar{F}]^t$) of the multilayer material; calculating the strength value ($[\bar{F}]^u$) of the multilayer material using the input values entered into the input part and an arbitrarily applied principal stress direction strength value ($[F]^p$) for the amorphous layer (p); and determining whether the calculated strength value ($[\bar{F}]^u$) of the multilayer material falls within an error range of a predetermined target strength value ($[\bar{F}]^t$) of the multilayer material. Here, n is an integer of 2 or more, and p is an integer from 1 to n, and the sum of k and p is n.

In one exemplary example, in the inputting the input values, the input values with respect to each layer (k) except the amorphous layer (p) further include any one or more among: elastic modulus ($E^k$), Poisson's ratio ($\upsilon^k$), shear modulus ($G^k$), thickness ($Z^k$), and lamination angle ($\theta^k$) of each layer (k); and the total thickness (h) of the multilayer material.

In a specific exemplary example, the calculating the strength value ($[\bar{F}]u$) of the multilayer material comprises: calculating the stress of each layer (k,p); transforming the stress of each layer (k,p) into the principal direction stress ($[\sigma]^{k,p}$) of each layer (k,p) by applying the lamination angle ($\theta^{k,p}$) of each layer (k,p); configuring the principal stress direction strength ($[F]^{k,p}$) of each layer (k,p) as a strength determination parameter ($[f]^{k,p}$) for determining the strength of the multilayer material; calculating the safety factor ($S^{k,p}$) of each layer (k,p) by combining the principal direction stress ($[\sigma]^{k,p}$) and the strength determination parameter ($[f]^{k,p}$) of each layer (k,p); and deriving the calculated strength value ($[\bar{F}]^u$) of the multilayer material from the calculated safety factor ($S^{k,p}$) of each layer (k,p).

Specifically, the calculating the stress of each layer (k,p) includes: calculating the force (/N) and moment (/M) of the multilayer material from the total thickness (h) of the multilayer material; calculating the mid-plane strain ($\varepsilon^0$) and curvature (K) using the force (/N) and moment (/M) of the multilayer material and the inverse matrix ([a], [b], [c], [d]) of the stiffness matrix ([A], [B], [D]) of the multilayer material; calculating the strain ($\varepsilon^{k,p}$) of each layer (k,p) using the mid-plane strain ($\varepsilon^0$), curvature (K), and thickness information ($Z^{k,p}$) of each layer (k,p); and calculating the stress ($\sigma^{k,p}$) of each layer (k,p) using the strain ($\varepsilon^{k,p}{}_{x,y}$) of each layer (k,p) and the stiffness matrix ($[Q]^{k,p}$) of each layer (k,p).

In one exemplary example, the deriving the calculated strength value ($[\bar{F}]^u$) of the multilayer material from the safety factor ($S^{k,p}$) of each layer (k,p) comprises: extracting the smallest value ($(S^{k,p})_{min}$) among the calculated safety factors ($S^{k,p}$) of each layer (k,p); and defining this as the calculated strength value ($[\bar{F}]^u$) of the multilayer material if the extracted smallest value ($(S^{k,p})_{min}$) meets the predetermined ULF (Ultimate Laminate Failure) criteria.

In a specific example, the determining whether the calculated strength value ($[\bar{F}]^u$) of the multilayer material falls within the error range of the predetermined target strength value ($[\bar{F}]^t$) of the multilayer material includes: providing the principal stress direction strength value ($[F]^p$) of the amorphous layer (p) as an appropriate value if the calculated strength value ($[\bar{F}]^u$) of the multilayer material falls within the error range of the target strength value ($[\bar{F}]^t$) of the multilayer material.

In another specific example, the determining whether the calculated strength value ($[\bar{F}]^u$) of the multilayer material falls within the error range of the predetermined target strength value ($[\bar{F}]^t$) of the multilayer material includes: recalculating the calculated strength value ($[\bar{F}]^u$) of the multilayer material if the calculated strength value ($[\bar{F}]^u$) of the multilayer material is outside the error range of the target strength value ($[\bar{F}]^t$) of the multilayer material. For example, if the calculated strength value ($[\bar{F}]^u$) of the multilayer material is smaller than the target strength value ($[\bar{F}]^t$) of the multilayer material, the principal stress direction strength value ($[F]^p$) of the amorphous layer is increased, and the calculated strength value ($[\bar{F}]^u$) of the multilayer material is recalculated. Alternatively, if the calculated strength value ($[\bar{F}]^u$) of the multilayer material is larger than the target strength value ($[\bar{F}]^t$) of the multilayer material, the principal stress direction strength value ($[F]^p$) of the amorphous layer is decreased, and the calculated strength value ($[\bar{F}]^u$) of the multilayer material is recalculated.

[Advantageous Effects]

The system and method for reverse engineering the strength of multilayer materials according to the present disclosure can reverse engineering of multilayer materials without the need for manufacturing multilayer material specimens. Specifically, the present disclosure can derive the required properties of the amorphous layer (p) to achieve the target strength of the multilayer material.

[Brief Description of the Drawings]

FIG. 1 is a block diagram of a property prediction system of a multilayer material according to a first embodiment of the present disclosure.

FIGS. 2 to 4 are flowcharts of a method for reverse engineering the strength of a multilayer material according to one embodiment of the present disclosure.

FIG. 5 is a schematic diagram showing the orientation of a multilayer material.

[Detailed Description]

The present disclosure provides a system for reverse engineering the strength of a multilayer material which stacked n layers (where n is an integer of 2 or more).

In one exemplary example, the system for reverse engineering the strength of a multilayer material according to the present disclosure comprises: an input part into which input values are entered, including the principal stress direction strength value ($[F]^k$) for each layer (k) except the amorphous layer (p), and the target strength value ($[\bar{F}]^t$) of the multilayer material; a control part for calculating the strength of the multilayer material by applying the input values entered into the input part; a display connected to the control part; and a storage part connected to the control part. Herein, n is an integer of 2 or more, and p is an integer from 1 to n, and the sum of k and p is n.

Specifically, the control part derives the calculated strength value ($[\bar{F}]^u$) of the multilayer material using the principal stress direction strength value ($[F]^k$) of each layer (k) and an arbitrarily applied principal stress direction strength value ($[F]^p$) of the amorphous layer (p), and determines whether the calculated strength value ($[\bar{F}]^u$) of the multilayer material falls within an error range of a predetermined target strength value ($[\bar{F}]^t$) of the multilayer material.

In the present disclosure, the amorphous layer (p) refers to any layer or layers where properties or characteristics are not specified and may include one or more layers within the multilayer material. In one example, the present disclosure includes cases where all layers of the multilayer material are amorphous layers (p). If all layers of the multilayer material are amorphous layers (p), the principal stress direction strength value ($[F]^k$) for each layer (k), except the amorphous layer (p), is not input.

In the present disclosure, the multilayer material includes cases where two or more materials are stacked, for example, including cases where two or more planar materials are stacked. In addition, the planar material may be a plastic molding or film and includes not only non-fibrous materials but also fibrous materials.

In the present disclosure, an arbitrary value is applied as the principal stress direction strength value ($[F]^p$) of the amorphous layer (p), and based on this, the calculated strength value ($[\bar{F}]^u$) of the multilayer material is derived. If the derived calculated strength value ($[\bar{F}]^u$) of the multilayer material falls within the error range of the target strength value ($[\bar{F}]^t$) of the multilayer material, the arbitrarily input principal stress direction strength value ($[F]^p$) of the amorphous layer (p) is presented as an appropriate value. Conversely, if the calculated strength value ($[\bar{F}]^u$) of the multilayer material is outside the error range of the target strength value ($[\bar{F}]^t$) of the multilayer material, the principal stress direction strength value ($[F]^p$) of the amorphous layer (p) is modified and the calculated strength value ($[\bar{F}]^u$) of the multilayer material is derived again.

The system for reverse engineering the strength of multilayer materials according to the present disclosure extracts the required principal stress direction strength value ($[F]^p$) of the amorphous layer (p) to reach the target strength value ($[\bar{F}]^t$) of the multilayer material through the above process.

In addition, for a more detailed description of the present disclosure, reference is made to Korean Patent Applications No. 2022-0086176, No. 2022-0086160, and No. 2022-0071405. All contents disclosed in these patent application documents are incorporated herein by reference as part of this specification.

In one exemplary example, the input values entered into the input part may include various values in addition to the principal stress direction strength value ($[F]^k$) of each layer (k). Specifically, the input values entered into the input part with respect to each layer (k) except the amorphous layer (p) may further include any one or more among the following: elastic modulus ($E^k$), Poisson's ratio ($\upsilon^k$), shear modulus ($G^k$), thickness ($Z^k$), and lamination angle ($\theta^k$) of each layer (k); and any one or more among the total thickness (h) of the multilayer material.

In one exemplary example, when the multilayer material includes one or more layers (k) that are not amorphous layers (p), k and p are each independently integers between 1 and n, and the sum of k and p satisfies n.

In another exemplary example, all layers of the multilayer material may be amorphous layers (p). In this case, the input values entered as the input values are replaced with information about the amorphous layers (p). Specifically, the input values entered into the input part with respect to each layer (p) that is an amorphous layer may further include any one or more among: elastic modulus ($E^p$), Poisson's ratio ($\upsilon^p$), shear modulus ($G^P$), thickness ($Z^p$), and lamination angle ($\theta^p$) of each layer (p); and the total thickness (h) of the multilayer material. Arbitrary values may be input for these input values for the amorphous layers (p). Alternatively, if some of the input values for the amorphous layers (p) are known, the known values may be input, and arbitrary values may be input for the other input values. **In** another example, the input value entered into the input part may be an arbitrarily applied principal stress direction strength value ($[F]^p$) of the amorphous layer (p).

Using the aforementioned input values, the control part calculates the stress of each layer (k,p) and further derives the calculated strength value ($[\bar{F}]^u$) of the multilayer material.

Specifically, the control part calculates the stress of each layer (k,p). It transforms the calculated stress of each layer (k,p) into the principal direction stress ($[\sigma]^{k,p}$) of each layer (k,p) by applying the lamination angle ($\theta^{k,p}$) of each layer (k,p). Then, the control part configures the principal stress direction strength ($[F]^{k,p}$) of each layer (k,p) as a strength determination parameter ($[f]^{k,p}$) for determining the strength of the multilayer material, and calculates the safety factor ($S^{k,p}$) of each layer (k,p) by combining the principal direction stress ($[\sigma]^{k,p}$) and the strength determination parameter ($[f]^{k,p}$) of each layer (k,p). The calculated strength value ($[\bar{F}]^u$) of the multilayer material is derived from the calculated safety factor ($S^{k,p}$) of each layer (k,p).

In one exemplary example, the control part may calculate the stress of each layer (k,p) through the following process. For example, the control part calculates the force (/N) and moment (/M) of the multilayer material from the total thickness (h) of the multilayer material. It calculates the mid-plane strain ($\varepsilon^0$) and curvature (K) using the calculated force (/N) and moment (/M) of the multilayer material and the inverse matrix ([a], [b], [c], [d]) of the stiffness matrix ([A], [B], [D]) of the multilayer material. The strain ($\varepsilon^{k,p}$) of each layer (k,p) is calculated using the calculated mid-plane strain ($\varepsilon^0$), curvature (K), and thickness information ($Z^{k,p}$) of each layer (k,p). Then, the stress ($\sigma^{k,p}$) of each layer (k,p) is calculated using the strain ($\varepsilon^{k,p}{}_{x,y}$) of each layer (k,p) and the stiffness matrix ($[Q]^{k,p}$) of each layer (k,p).

In another exemplary example, the control part may derive the calculated strength value ($[\bar{F}]^u$) of the multilayer material from the safety factor ($S^{k,p}$) of each layer (k,p) through the following process. For example, the control part extracts the smallest value ($(S^{k,p})_{min}$) among the calculated safety factors of each layer (k,p). If the extracted smallest value ($(S^{k,p})_{min}$) meets the predetermined ULF (Ultimate Laminate Failure) criteria, it is defined as the calculated strength value ($[\bar{F}]^u$) of the multilayer material.

In one exemplary example, the process of determining whether the calculated strength value ($[\bar{F}]^u$) of the multilayer material falls within the error range of the predetermined target strength value ($[\bar{F}]^t$) of the multilayer material can be performed as follows.

For example, if the calculated strength value ($[\bar{F}]^u$) of the multilayer material falls within the error range of the target strength value ($[\bar{F}]^t$) of the multilayer material, the principal stress direction strength value ($[F]^p$) of the amorphous layer is presented as an appropriate value.

In another example, if the calculated strength value ($[\bar{F}]^u$) of the multilayer material is outside the error range of the target strength value ($[\bar{F}]^t$) of the multilayer material, the following steps are taken: If the calculated strength value ($[\bar{F}]^u$) of

the multilayer material is smaller than the target strength value ($[\bar{F}]^t$) of the multilayer material, the principal stress direction strength value ($[F]^p$) of the amorphous layer (p) is increased, and the calculated strength value ($[\bar{F}]^u$) of the multilayer material is recalculated. Conversely, if the calculated strength value ($[\bar{F}]^u$) of the multilayer material is larger than the target strength value ($[\bar{F}]^t$) of the multilayer material, the principal stress direction strength value ($[F]^p$) of the amorphous layer (p) is decreased, and the calculated strength value ($[\bar{F}]^u$) of the multilayer material is recalculated.

In addition, the present disclosure provides a method for reverse engineering the strength of a multilayer material comprising n layers including an amorphous layer (p).

In one exemplary example, the method for reverse engineering the strength of the multilayer material according to the present disclosure including:

- inputting input values including the principal stress direction strength value ($[F]^k$) for each layer (k) except the amorphous layer (p) and the target strength value ($[\bar{F}]^t$) of the multilayer material;
- calculating the strength value ($[\bar{F}]^u$) of the multilayer material using the input values entered into the input part and an arbitrarily applied principal stress direction strength value ($[F]^p$) for the amorphous layer (p); and
- determining whether the calculated strength value ($[\bar{F}]^u$) of the multilayer material falls within an error range of a predetermined target strength value ($[\bar{F}]^t$) of the multilayer material.

Herein, n is an integer of 2 or more, and p is an integer from 1 to n, and the sum of k and p is n.

In one example, the present disclosure includes cases where all layers of the multilayer material are amorphous layers (p). In cases where all layers of the multilayer material are amorphous layers (p), the principal stress direction strength value ($[F]^k$) for each layer (k) except the amorphous layer (p) is not input.

In a specific example, in the inputting the input values, the input values with respect to each layer (k) except the amorphous layer (p) may further include any one or more among: elastic modulus ($E^k$), Poisson's ratio ($\upsilon^k$), shear modulus ($G^k$), thickness ($Z^k$), and lamination angle ($\theta^k$) of each layer (k); and the total thickness (h) of the multilayer material.

In another exemplary example, all layers of the multilayer material may be amorphous layers (p). In this case, the input values entered into the input part with respect to each layer (p) that is an amorphous layer may further include any one or more among: elastic modulus ($E^p$), Poisson's ratio ($\upsilon^p$), shear modulus ($G^p$), thickness ($Z^p$), and lamination angle ($\theta^p$) of each layer (p); and the total thickness (h) of the multilayer material. Arbitrary values may be input for these input values for the amorphous layers (p). Alternatively, if some of the input values for the amorphous layers (p) are known, the known values may be input, and arbitrary values may be input for the other input values. In another example, the input value entered into the input part may be an arbitrarily applied principal stress direction strength value ($[F]^p$) of the amorphous layer (p).

In one exemplary example, the step of calculating the strength value ($[\bar{F}]^u$) of the multilayer material includes:

- calculating the stress of each layer (k,p);
- transforming the stress of each layer (k,p) into the principal direction stress ($[\sigma]^{k,p}$) of each layer (k,p) by applying the lamination angle ($\theta^{k,p}$) of each layer (k,p);
- configuring the principal stress direction strength ($[F]^{k,p}$) of each layer (k,p) as a strength determination parameter ($[f]^{k,p}$) for determining the strength of the multilayer material;
- calculating the safety factor ($S^{k,p}$) of each layer (k,p) by combining the principal direction stress ($[\sigma]^{k,p}$) and the strength determination parameter ($[f]^{k,p}$) of each layer (k,p); and
- deriving the calculated strength value ($[\bar{F}]^u$) of the multilayer material from the calculated safety factor ($S^{k,p}$) of each layer (k,p).

In a specific example, the step of calculating the stress of each layer (k,p) includes:

- calculating the force (/N) and moment (/M) of the multilayer material from the total thickness (h) of the multilayer material;
- calculating the mid-plane strain ($\varepsilon^0$) and curvature (K) using the force (/N) and moment (/M) of the multilayer material and the inverse matrix ([a], [b], [c], [d]) of the stiffness matrix ([A], [B], [D]) of the multilayer material;
- calculating the strain ($\varepsilon^{k,p}$) of each layer (k,p) using the mid-plane strain ($\varepsilon^0$), curvature (K), and thickness information ($Z^{k,p}$) of each layer (k,p); and
- calculating the stress ($\sigma^{k,p}$) of each layer (k,p) using the strain ($\varepsilon^{k,p}{}_{x,y}$) of each layer (k,p) and the stiffness matrix ($[Q]^{k,p}$) of each layer (k,p).

In another specific example, the step of deriving the calculated strength value ($[\bar{F}]^u$) of the multilayer material from the safety factor ($S^{k,p}$) of each layer (k,p) includes:

extracting the smallest value ($(S^{k,p})_{min}$) among the calculated safety factors ($S^{k,p}$) of each layer (k,p); and defining this as the calculated strength value ($[\bar{F}]^u$) of the multilayer material if the extracted smallest value ($(S^{k,p})_{min}$) meets the predetermined ULF (Ultimate Laminate Failure) criteria.

In one exemplary example, the step of determining whether the calculated strength value ($[\bar{F}]^u$) of the multilayer material falls within the error range of the predetermined target strength value ($[\bar{F}]^t$) of the multilayer material comprises: providing the principal stress direction strength value ($[F]^p$) of the amorphous layer (p) as an appropriate value if the calculated strength value ($[\bar{F}]^u$) of the multilayer material falls within the error range of the target strength value ($[\bar{F}]^t$) of the multilayer material.

In yet another exemplary example, the step of determining whether the calculated strength value ($[\bar{F}]^u$) of the multilayer material falls within the error range of the predetermined target strength value ($[\bar{F}]^t$) of the multilayer material includes: if the calculated strength value ($[\bar{F}]^u$) of the multilayer material is outside the error range of the target strength value ($[\bar{F}]^t$) of the multilayer material, and if the calculated strength value ($[\bar{F}]^u$) of the multilayer material is smaller than the target strength value ($[\bar{F}]^t$) of the multilayer material, increasing the principal stress direction strength value ($[F]^p$) of the amorphous layer and recalculating the calculated strength value ($[\bar{F}]^u$) of the multilayer material.

Conversely, if the calculated strength value ($[\bar{F}]^u$) of the multilayer material is larger than the target strength value ($[\bar{F}]^t$) of the multilayer material, the principal stress direction strength value ($[F]^p$) of the amorphous layer is decreased, and the calculated strength value ($[\bar{F}]^u$) of the multilayer material is recalculated.

For example, the method for calculating the strength of the multilayer material may be performed as follows:

calculating the stress of each layer (k,p) by inputting any one or more among elastic modulus ($E^{k,p}$), Poisson's ratio ($\upsilon^{k,p}$), shear modulus ($G^{k,p}$), thickness ($Z^{k,p}$), lamination angle ($\theta^{k,p}$) of each layer (k,p), and the total thickness (h) of the multilayer material (Step a);

transforming the calculated stress of each layer (k,p) into the principal direction stress ($[\sigma]^{k,p}$) of each layer (k,p) by applying the lamination angle ($\theta^{k,p}$) of each layer (k,p) (Step b);

configuring the separately input principal stress direction strength ($[F]^{k,p}$) of each layer (k,p) as a strength determination parameter ($[f]^{k,p}$) for determining the strength of the multilayer material (Step c);

calculating the safety factor of each layer (k,p) by combining the principal direction stress ($[\sigma]^{k,p}$) and the strength determination parameter ($[f]^{k,p}$) of each layer (k,p) (Step d); and

defining the strength value of the multilayer material by extracting the smallest value among the calculated safety factors of each layer (k,p) (Step e).

As one example, the process of predicting the strength of the multilayer material according to the present disclosure is as follows:

The input information includes any one or more among: the elastic modulus ($E^{k,p}{}_{1,2}$) in the Machine Direction (MD, 1) and Transverse Direction (TD, 2) of each layer (k,p), the Poisson's ratio ($\upsilon^{k,p}{}_{1,2}$) in the Machine Direction (1) and Transverse Direction (2) of each layer (k,p), the shear modulus ($G^{K,P}{}_{1,2}$) in the Machine Direction (1) and Transverse Direction (2) of each layer (k,p), the angle ($\theta^{k,p}$) of the Machine Direction (1) of each layer relative to the x-direction of the multilayer material, the thickness ($Z^{k,p}$) of each layer (k,p), and the total thickness (h) of the multilayer material.

First, utilizing the input information, the stress ($\sigma^{k,p}{}_{x,y}$) of each layer (k,p) is calculated. Then, the calculated stress ($\sigma^{k,p}{}_{x,y}$) of each layer (k,p) is transformed into the principal direction stress ($[\sigma]^{k,p}{}_{1,2}$) of each layer (k,p) by applying the lamination angle ($\theta^{k,p}$) of each layer (k,p). Additionally, the principal stress direction strength ($[F]^p$) of the amorphous layer (p) is arbitrarily applied.

The principal stress direction strength ($[F]^{k,p}{}_{1,2}$) of each layer (k,p) is configured as a strength determination parameter ($[f]^{k,p}{}_{1,2}$) for determining the strength of the multilayer material. Here, it is explained that the principal stress direction strength ($[F]^{k,p}{}_{1,2}$) of each layer (k,p) includes the principal stress direction strength ($[F]^p{}_{1,2}$) of the amorphous layer (p). The safety factor ($S^{k,p}{}_f$) of each layer (k,p) is calculated by combining the principal direction stress ($[\sigma]^{k,p}{}_{1,2}$) and the strength determination parameter ($[f]^{k,p}{}_{1,2}$) of each layer (k,p). For example, to calculate the safety factor ($S^{k,p}{}_f$) of each layer (k,p), the Tsai-Wu criterion can be applied, or alternatively, the Maximum Stress criterion, Maximum Strain criterion, or Tsai-Hill criterion can be appropriately applied.

The smallest value ($(S^{k,p}{}_f)_{min}$) among the calculated safety factors ($S^{k,p}{}_f$) of each layer (k,p) is extracted and defined as the strength value ($[\bar{F}]^i{}_{x,y}$) of the multilayer material. In this case, the smallest value ($(S^{k,p}{}_f)_{min}$) among the calculated safety factors of each layer (k,p) is defined as the strength value ($[\bar{F}]^i{}_{x,y}$) of the multilayer material, and if this value meets the predetermined ULF (Ultimate Laminate Failure) criteria, it is designated as the final calculated strength value ($[\bar{F}]^u{}_{x,y}$) of the multilayer material. Here, if the calculated strength value ($[\bar{F}]^u$) of the multilayer material falls within the error range of the target strength value ($[\bar{F}]^t$) of the multilayer material, the principal stress direction strength value ($[F]^p$) of the amorphous layer (p) is presented as an appropriate value.

The process of extracting the smallest value ($(S^{k,p}{}_f)_{min}$) among the calculated safety factors ($S^{k,p}{}_f$) of each layer (k,p) and defining it as the strength value $([\bar{F}]^{i}_{x,y})$ of the multilayer material can be categorized into the following three methods depending on the method of applying the ULF criteria.

The first method involves repeating the calculating the stress of each layer (k,p) (Step a) to calculating the safety factor of each layer (k,p) (Step d) once, extracting the smallest value $((S^{k,p}_{f})_{min})$ among the calculated safety factors $(S^{k,p}_{f})$ of each layer (k,p) and defining it as the strength value $([\bar{F}]^{i}_{x,y})$ of the multilayer material, and if this defined strength value $([\bar{F}]^{i}_{x,y})$ of the multilayer material meets the predetermined ULF (Ultimate Laminate Failure) criteria, it is designated as the final strength value $([\bar{F}]^{u}_{x,y})$ of the multilayer material. In this case, if any one of the layers comprising the multilayer material fails, the strength value of the final multilayer material is determined based on this.

The second method involves repeating the calculating the stress of each layer (k,p) (Step a) to calculating the safety factor of each layer (k,p) (Step d) n times, where the value calculated in the i-th cycle is reflected in the input values for performing the i+1-th cycle. The strength at which all n layers forming the multilayer material failure is defined as the strength value $([\bar{F}]^{i}_{x,y})$ of the multilayer material, and if this value meets the predetermined ULF (Ultimate Laminate Failure) criteria, it is designated as the calculated strength value $([\bar{F}]^{u}_{x,y})$ of the multilayer material. Here, i is an integer between 1 and n-1, and n represents the number of layers (k,p) constituting the multilayer material. For each cycle, the smallest value $((S^{k,p}_{f})_{min})$ among the calculated safety factors $(S^{k,p}_{f})$ of each layer (k,p) is extracted and defined as the strength value $([\bar{F}]^{i}_{x,y})$ of the multilayer material for that cycle. In this case, the strength reflecting the failure of all layers constituting the multilayer material is selected as the final strength value of the multilayer material.

The third method involves repeatedly performing the calculating the stress of each layer (k,p) (Step a) to calculating the safety factor of each layer (k,p) (Step d), where the value calculated in the i-th cycle is reflected in the input values for performing the i+1-th cycle, and the value calculated in the i-th cycle is compared with the value calculated in the i+1-th cycle. When the defined strength of the multilayer material no longer increases, the value calculated in the i-th cycle is defined as the strength of the multilayer material. Here, i is an integer between 1 and n-1, and n represents the number of layers (k,p) constituting the multilayer material. For each cycle, the smallest value $((S^{k,p}_{f})_{min})$ among the calculated safety factors $(S^{k,p}_{f})$ of each layer (k,p) is extracted and defined as the strength value $([\bar{F}]^{i}_{x,y})$ of the multilayer material for that cycle. In this case, the strength reflecting the layer that withstands the maximum load among the layers constituting the multilayer material is selected as the calculated strength value $([\bar{F}]^{u}_{x,y})$ of the multilayer material.

In yet another exemplary example, the smallest value $((S^{k,p}_{f})_{min})$ among the calculated safety factors $(S^{k,p}_{f})$ of each layer (k,p) is extracted and defined as the strength value $([\bar{F}]^{i}_{x,y})$ of the multilayer material. In this case, the smallest value $((S^{k,p}_{f})_{min})$ among the calculated safety factors of each layer (k,p) is defined as the strength value $([\bar{F}]^{i}_{x,y})$ of the multilayer material, and it can be checked whether this value meets the predetermined ULF (Ultimate Laminate Failure) criteria.

If the value defined as the strength value $([\bar{F}]^{i}_{x,y})$ of the multilayer material meets the predetermined ULF (Ultimate Laminate Failure) criteria, it is designated as the calculated strength value $([\bar{F}]^{u}_{x,y})$ of the multilayer material.

Conversely, if the value defined as the strength value $([\bar{F}]^{i}_{x,y})$ of the multilayer material does not meet the predetermined ULF (Ultimate Laminate Failure) criteria, the elastic modulus of the failure layer determined in that cycle is adjusted and recalculated. Specifically, a coefficient r is applied to adjust the elastic modulus of the failure layer. For example, when r=0, it is assumed that the failure layer in that cycle has lost its stress-bearing capacity in the corresponding direction for the next loading cycle. When $0<r<1$, it is assumed that the failure layer in that cycle has partially lost its stress-bearing capacity for the next loading cycle. Simultaneously, the strength of the failure layer is changed to infinity to ensure that the same layer does not fail in the next loading cycle.

In yet another exemplary example, the calculating the stress of each layer (k,p) by inputting any one or more among elastic modulus $(E^{k,p})$, Poisson's ratio $(\upsilon^{k,p})$, shear modulus $(G^{k,p})$, thickness $(Z^{k,p})$, lamination angle $(\theta^{k,p})$ of each layer (k,p), and the total thickness (h) of the multilayer material (Step a) can be performed as follows.

First, the input information includes: the elastic modulus $(E^{k,p}_{1,2})$ in the Machine Direction (MD, 1) and Transverse Direction (TD, 2) of each layer (k,p), the Poisson's ratio $(\upsilon^{k,p}_{1,2})$ in the Machine Direction (1) and Transverse Direction (2) of each layer (k,p), the shear modulus $(G^{k,p}_{1,2})$ in the Machine Direction (1) and Transverse Direction (2) of each layer (k,p), the angle $(\theta^{k,p})$ of the Machine Direction (1) of each layer relative to the x-direction of the multilayer material, the thickness $(Z^{k,p})$ of each layer (k,p), and the total thickness (h) of the multilayer material.

Using the elastic modulus $(E^{k,p}_{1,2})$, Poisson's ratio $(\upsilon^{k,p}_{1,2})$, and shear modulus $(G^{k,p}_{1,2})$, the stiffness matrix $([Q]^{k,p}_{1,2})$ in the Machine Direction (1) and Transverse Direction (2) of each layer (k,p) is calculated. The compliance matrix $([S]^{k,p}_{1,2})$, which is the inverse of the stiffness matrix $([Q]^{k,p}_{1,2})$ in the Machine Direction (1) and Transverse Direction (2) of each layer (k,p), is then established. The stiffness matrix $([Q]^{k,p}_{x,y})$ of each layer (k,p) is redefined by applying the lamination angle $(\theta^{k,p})$ of each layer (k,p) to the stiffness matrix $([Q]^{k,p}_{1,2})$. Using the thickness $(Z^{k,p})$ information of each layer (k,p) and the redefined stiffness matrix values, the stiffness matrices $([A]_{x,y}, [B]_{x,y}, [D]_{x,y})$ of the multilayer material are calculated. Finally, the compliance matrices $([a]_{x,y}, [b]_{x,y}, [c]_{x,y}, [d]_{x,y})$, which are the inverses of the stiffness matrices $([A]_{x,y}, [B]_{x,y}, [D]_{x,y})$ of the multilayer material, are established.

Next, using the compliance matrix for arbitrary force (/F) and moment (/M), the mid-plane strain and curvature are calculated. Then, utilizing the calculated mid-plane strain and curvature, along with the thickness $(Z^{k,p})$ information of each layer (k,p), the strain of each layer (k,p) is calculated.

Specifically, the arbitrary force (/F) and moment (/M) are assumed virtual external forces, which can be defined using the total thickness value to virtually apply a unit normal stress to the multilayer material.

Using the force (/N) and moment (/M), and the compliance matrix ($[a]_{x,y}$, $[b]_{x,y}$, $[c]_{x,y}$, [d]x,y) which is the inverse of the stiffness matrix ($[A]_{x,y}$, $[B]_{x,y}$, $[D]_{x,y}$) of the multilayer material, the midplane strain ($\varepsilon^0_{x,y}$) and curvatures ($k,p_{x,y,s}$) are calculated. Then, utilizing the midplane strain ($\varepsilon^0_{x,y}$) and curvatures ($k,p_{x,y,s}$), along with the thickness ($Z^{k,p}$) information of each layer (k,p), the strain ($\varepsilon^{k,p}{}_{x,y}$) of each layer (k,p) is calculated. Subsequently, using the strain of each layer (k,p) and the stiffness matrix ($[Q]^{k,p}{}_{x,y}$) of each layer (k,p), the stress ($\sigma^{k,p}{}_{x,y}$) of each layer (k,p) is calculated. Finally, the calculated stress ($\sigma^{k,p}{}_{x,y}$) of each layer (k,p) is transformed into the principal direction stress ($[\sigma]^{k,p}{}_{1,2}$) of each layer (k,p) by applying the lamination angle ($\theta^{k,p}$) of each layer (k,p).

[Detailed Description]

The present disclosure will be described more specifically through the following drawings and exemplary examples; however, the scope of the present disclosure is not limited thereto.

(First embodiment)

FIG. 1 is a configuration diagram of a system for reverse engineering the strength of a multilayer material according to the first embodiment of the present disclosure.

As illustrated in FIG. 1, the system for reverse engineering the strength of a multilayer material according to the first embodiment of the present disclosure includes an input part 10 for inputting input values, a control part 20 connected to the input part 10, a display 30 connected to the control part 20, and a storage part 40 connected to the control part 20.

The input values entered into the input part 10 with respect to each layer (k) except the amorphous layer (p) include the principal stress direction strength value ($[F]^k$) and the target strength value ($[\bar{F}]^t$) of the multilayer material.

In some cases, the input values may further include additional input values. For example, the additional input values may include: the elastic modulus ($E^k{}_{1,2}$) in the Machine Direction (MD, hereinafter set as '1' and referring to the principal direction) and Transverse Direction (TD, hereinafter set as '2') of each layer (k), the Poisson's ratio ($\upsilon^k{}_{1,2}$) in the Machine Direction (1) and Transverse Direction (2) of each layer (k), the shear modulus ($G^k{}_{1,2}$) in the Machine Direction (1) and Transverse Direction (2) of each layer (k), the angle ($\theta^k$) of the Machine Direction (1) of each layer relative to the x-direction of the multilayer material, and the thickness ($Z^k$) of each layer (k). Additionally, the additional input values include the total thickness (h) of the multilayer material.

The control part 20, for example, may include a multilayer material property calculation unit 21 and a layer-wise strain and stress calculation unit 22. The control part 20 derives the calculated strength value ($[\bar{F}]^u$) of the multilayer material using the principal stress direction strength value ($[F]^k$) of each layer (k) and an arbitrarily applied principal stress direction strength value ($[F]^p$) of the amorphous layer (p).

In the present disclosure, the term "multilayer materials" refers to a laminate structure comprising two or more materials stacked together. For example, the multilayer material may refer to multilayer films of polymers and the like, or composite materials of heterogeneous materials such as FRP (fiber reinforced plastics) and aluminum pouches. For instance, the multilayer material may refer to multilayer films.

(Second embodiment)

FIG. 2 is a flowchart of a method for reverse engineering the strength of a multilayer material according to one embodiment of the present disclosure.

Specifically, FIG. 2 illustrates the process of calculating the stress for each layer in a multilayer material composed of two or more stacked materials.

The following parameters are input (S11): the elastic modulus ($E^k{}_{1,2}$) in the Machine Direction (1) and Transverse Direction (2) of each layer (k), the Poisson's ratio ($\upsilon^k{}_{1,2}$) in the Machine Direction (1) and Transverse Direction (2) of each layer (k), the shear modulus ($G^k{}_{1,2}$) in the Machine Direction (1) and Transverse Direction (2) of each layer (k), the angle ($\theta^k$) of the Machine Direction (1) of each layer relative to the x-direction of the multilayer material, and the thickness ($Z^k$) of each layer (k).

Using the elastic modulus ($E^k{}_{1,2}$), Poisson's ratio ($\upsilon^k{}_{1,2}$), and shear modulus ($G^k{}_{1,2}$), the stiffness matrix ($[Q]^k{}_{1,2}$) in the Machine Direction (1) and Transverse Direction (2) of each layer (k) is calculated as shown in the following Equation (1) (S12).

$$\begin{bmatrix} \sigma_1 \\ \sigma_2 \\ \tau_6 \end{bmatrix} = \begin{bmatrix} Q_{11} & Q_{12} & 0 \\ Q_{21} & Q_{22} & 0 \\ 0 & 0 & Q_{66} \end{bmatrix} \begin{bmatrix} \varepsilon_1 \\ \varepsilon_2 \\ \gamma_6 \end{bmatrix}$$

$$Q_{11} = \frac{E_1}{1 - \upsilon_{12}\upsilon_{21}} \qquad Q_{22} = \frac{E_2}{1 - \upsilon_{12}\upsilon_{21}}$$

$$Q_{12} = Q_{21} = \frac{\upsilon_{21} E_1}{1 - \upsilon_{12}\upsilon_{21}} = \frac{\upsilon_{12} E_2}{1 - \upsilon_{12}\upsilon_{21}}$$

$$Q_{66} = G_{12'} \tag{1}$$

(For isotropic materials, $G = E / 2(1+\upsilon)$)

The compliance matrix ($[S]^k_{1,2}$), which is the inverse of the calculated stiffness matrix ($[Q]^k_{1,2}$) in the Machine Direction (1) and Transverse Direction (2) of each layer (k), is established (S13).

The stiffness matrix ($[Q]^k_{x,y}$) of each layer (k) is redefined as shown in the following Equation (2) by applying the lamination angle ($\theta^k$) of each layer (k) to the derived stiffness matrix ($[Q]^k_{1,2}$) (S14).

$$[T] = \begin{bmatrix} m^2 & n^2 & 2mn \\ n^2 & m^2 & -2mn \\ -mn & mn & m^2 - n^2 \end{bmatrix} \qquad m = \cos\theta \ , \ n = \sin\theta$$

$$\begin{bmatrix} Q_{xx} & Q_{xy} & 2Q_{xs} \\ Q_{xy} & Q_{yy} & 2Q_{ys} \\ Q_{xs} & Q_{ys} & 2Q_{ss} \end{bmatrix} = [T^{-1}] \begin{bmatrix} Q_{11} & Q_{12} & 0 \\ Q_{12} & Q_{22} & 0 \\ 0 & 0 & 2Q_{66} \end{bmatrix} [T]$$

$$\begin{bmatrix} Q_x \\ Q_y \\ \tau_s \end{bmatrix} = \begin{bmatrix} Q_{xx} & Q_{xy} & Q_{xs} \\ Q_{xy} & Q_{yy} & Q_{ys} \\ Q_{xs} & Q_{ys} & Q_{ss} \end{bmatrix} \begin{bmatrix} \varepsilon_x \\ \varepsilon_y \\ \gamma_s \end{bmatrix} \tag{2}$$

Stress-strain relation with angle (dir-x,y)

Using the thickness information of each layer (k) and the redefined stiffness matrix values, the stiffness matrices ($[A]_{x,y}$, $[B]_{x,y}$, $[D]_{x,y}$) of the entire laminate structure, which is the multilayer material, are calculated as shown in the following Equation (3) (S15).

$$A_{ij} = \sum_{k=1}^{n} Q_{ij}^{k} (z_k - z_{k-1}) \qquad B_{ij} = \frac{1}{2} \sum_{k=1}^{n} Q_{ij}^{k} (z_k{}^\wedge 2 - z_{k-1}{}^\wedge 2)$$

$$D_{ij} = \frac{1}{3} \sum_{k=1}^{n} Q_{ij}^{k} (z_k{}^\wedge 3 - z_{k-1}{}^\wedge 3)$$

The subscript k indicates each layer, for a total of n layers

(3)

The compliance matrices ($[a]_{x,y}$, $[b]_{x,y}$, $[c]_{x,y}$, $[d]_{x,y}$), which are the inverses of the calculated stiffness matrices ($[A]_{x,y}$, $[B]_{x,y}$, $[D]_{x,y}$) of the entire laminate structure (i.e., the multilayer material), are established as shown in the following Equation (4) (S16).

$$\begin{bmatrix} A_{xx} & A_{xy} & A_{xs} & B_{xx} & B_{xy} & B_{xs} \\ A_{yx} & A_{yy} & A_{yx} & B_{yx} & B_{yy} & B_{yx} \\ A_{sx} & A_{sy} & A_{ss} & B_{sx} & B_{sy} & B_{ss} \\ B_{xx} & B_{xy} & B_{xs} & D_{xx} & D_{xy} & D_{xs} \\ B_{yx} & B_{yy} & B_{ys} & D_{yx} & D_{yy} & D_{ys} \\ B_{sx} & B_{sy} & B_{ss} & D_{sx} & D_{sy} & D_{ss} \end{bmatrix}^{-1} = \begin{bmatrix} a_{xx} & a_{xy} & a_{xs} & b_{xx} & b_{xy} & b_{xs} \\ a_{yx} & a_{yy} & a_{yx} & b_{yx} & b_{yy} & b_{yx} \\ a_{sx} & a_{sy} & a_{ss} & b_{sx} & b_{sy} & b_{ss} \\ c_{xx} & c_{xy} & c_{xs} & d_{xx} & d_{xy} & d_{xs} \\ c_{yx} & c_{yy} & c_{ys} & d_{yx} & d_{yy} & d_{ys} \\ c_{sx} & c_{sy} & c_{ss} & d_{sx} & d_{sy} & d_{ss} \end{bmatrix}$$

(4)

In the present disclosure, to virtually apply a unit normal stress to the entire multilayer material, it can be defined using the total thickness value as shown in the following Equation (5) or Equation (6) (S17). Here, Equation (5) is applied when calculating the strength in the x direction of the multilayer material, and Equation (6) is applied when calculating the strength in the y direction of the multilayer material.

$$\begin{bmatrix} \bar{N}_x \\ \bar{N}_y \\ \bar{N}_s \\ \bar{M}_x \\ \bar{M}_y \\ \bar{M}_s \end{bmatrix} = \begin{bmatrix} h \\ 0 \\ 0 \\ 0 \\ 0 \\ 0 \end{bmatrix} \qquad (5)$$

$$\begin{bmatrix} \bar{N}_x \\ \bar{N}_y \\ \bar{N}_s \\ \bar{M}_x \\ \bar{M}_y \\ \bar{M}_s \end{bmatrix} = \begin{bmatrix} 0 \\ h \\ 0 \\ 0 \\ 0 \\ 0 \end{bmatrix} \qquad (6)$$

Using the input total force (/N) and total moment (/M), and the compliance matrices ($[a]_{x,y}$, $[b]_{x,y}$, $[c]_{x,y}$, $[d]_{x,y}$), which are the inverses of the stiffness matrices ($[A]_{x,y}$, $[B]_{x,y}$, $[D]_{x,y}$) of the entire laminate structure (i.e., the multilayer material), the midplane strain ($\varepsilon^0_{x,y}$) and curvatures ($k,p_{x,y,s}$) are calculated as shown in the following Equation (7) (S18).

$$\begin{bmatrix} \varepsilon^0_x \\ \varepsilon^0_y \\ \gamma^0_s \\ \hline K_x \\ K_y \\ K_s \end{bmatrix} = \left[\begin{array}{ccc|ccc} a_{xx} & a_{xy} & a_{xx} & b_{xx} & b_{xy} & b_{xx} \\ a_{yx} & a_{yy} & a_{ys} & b_{yx} & b_{yy} & b_{ys} \\ a_{sx} & a_{sy} & a_{ss} & b_{sx} & b_{sy} & b_{ss} \\ \hline c_{xx} & c_{xy} & c_{xx} & d_{xx} & d_{xy} & d_{xx} \\ c_{yx} & c_{yy} & c_{ys} & d_{yx} & d_{yy} & d_{ys} \\ c_{sx} & c_{sy} & c_{ss} & d_{sx} & d_{sy} & d_{ss} \end{array}\right] \begin{bmatrix} \bar{N}_x \\ \bar{N}_y \\ \bar{N}_s \\ \hline \bar{M}_x \\ M_y \\ M_s \end{bmatrix} \quad \begin{matrix} a & b \\ c & d \end{matrix} \tag{7}$$

Using the midplane strain ($\varepsilon^0_{x,y}$) and curvatures ($k_{x,y,s}$), and the thickness ($Z^k$) information of each layer (k) input through the input part, the strain ($\varepsilon^k_{x,y}$) of each layer (k) is calculated as shown in the following Equation (8) (S19).

$$\begin{bmatrix} \varepsilon_x \\ \varepsilon_y \\ \gamma_s \end{bmatrix}_k = \begin{bmatrix} \varepsilon^0_x \\ \varepsilon^0_y \\ \gamma^0_s \end{bmatrix} + z_k \begin{bmatrix} k_x \\ k_y \\ k_s \end{bmatrix} \tag{8}$$

Using the strain of each layer (k) and the stiffness matrix ($[Q]^k_{x,y}$) of each layer (k), the stress ($\sigma^k_{x,y}$) of each layer (k) is calculated as shown in the following Equation (9) (S20).

$$\begin{bmatrix} \sigma_x \\ \sigma_y \\ \tau_s \end{bmatrix}_k = \begin{bmatrix} Q_{xx} & Q_{xy} & Q_{xs} \\ Q_{yx} & Q_{yy} & Q_{ys} \\ Q_{sx} & Q_{sy} & Q_{ss} \end{bmatrix}_k \begin{bmatrix} \varepsilon_x \\ \varepsilon_y \\ \gamma_s \end{bmatrix}_k \tag{9}$$

The second embodiment exemplifies the process of calculating the stress of each layer (k), except for the amorphous layer (p), using the input values. The second embodiment can be equally applied to the amorphous layer (p). As one example, the input values for the amorphous layer (p) can be arbitrarily applied. As another example, if some of the input values for the amorphous layer (p) are known, the known values can be input, and arbitrary values can be input for the other input values.

(Third embodiment)

FIG. 3 is a flowchart of a method for reverse engineering the strength of a multilayer material according to one embodiment of the present disclosure. FIG. 3 illustrates the process of calculating the calculated strength value ($[\bar{F}]^u$) of the multilayer material using the input values and an arbitrarily applied principal stress direction strength value ($[F]^p$) of the amorphous layer (p).

Referring to FIG. 3, the calculated stress ($\sigma^{k,p}_{x,y}$) of each layer (k,p) in the x,y directions is transformed into the principal direction stress ($[\sigma]^{k,p}_{1,2}$) in the Machine Direction (MD) and Transverse Direction (TD) of each layer (k,p) using

the lamination angle ($\theta^{k,p}$) information of each layer (S21). Here, the following Equation (10) is used.

$$[T] = \begin{bmatrix} m^2 & n^2 & 2mn \\ n^2 & m^2 & -2mn \\ -mn & mn & m^2 - n^2 \end{bmatrix} \quad m = \cos\theta, n = \sin\theta$$

$$\begin{bmatrix} \sigma_1 \\ \sigma_2 \\ \tau_6 \end{bmatrix}_k = [T] \begin{bmatrix} \sigma_x \\ \sigma_y \\ \tau_s \end{bmatrix}_k \qquad (10)$$

Separately, the principal stress direction strength ($[F]^k_{1,2}$) of each layer (k), except for the amorphous layer (p), , for example, is input as follows (S22):

Tensile strength in 1-direction of each layer (k): $F^k_{1t}$, Compressive strength in 1-direction: $F^k_{1c}$
Tensile strength in 2-direction of each layer (k): $F^k_{2t}$, Compressive strength in 2-direction: $F^k_{2c}$
Tensile strength in 6-direction of each layer (k): $F^k_6$, Biaxial tensile strength in 1-2 direction: $F^k_{12}$

Here, for the amorphous layer (p), an arbitrarily applied principal stress direction strength value ($[F]^p_{1,2}$) is input.
Here, the directions of each layer (k,p) are as shown in FIG. 5. Referring to FIG. 5, the horizontal direction of the multilayer material is set as the 1-direction or x-direction, and the vertical direction is set as the 2-direction or y-direction. Additionally, the diagonal direction is set as the 6-direction or s-direction.
Using the input strength of each layer (k,p), parameters for determining the strength of the entire multilayer material are configured as shown in the following Equation (11) (S23). The following Equation (11) is an example applying the Tsai-Wu criterion.

$$[f]^k = [f_1\ f_2\ f_{11}\ f_{22}\ f_{66}\ f_{12}]^k$$

$$f_1 = \frac{1}{F_{1t}} - \frac{1}{F_{1c}} \qquad f_2 = \frac{1}{F_{2t}} - \frac{1}{F_{2c}}$$

$$f_{11} = \frac{1}{F_{1t}F_{1c}} \qquad f_{22} = \frac{1}{F_{2t}F_{2c}} \qquad f_{66} = \frac{1}{F_6^2}$$

$$f_{12} = \frac{1}{2F_{(12)}^2}\left[1 - F_{(12)}(f_1 + f_2) - F_{(12)}^2(f_{11} + f_{22})\right] \qquad (11)$$

Here, if the experimental value of biaxial tensile strength is not available, it can be assumed as shown in the following Equation (12).

$$f_{12} \cong -\frac{1}{2}(f_{11}f_{22})^{1/2} \qquad (12)$$

The safety factor ($S^{k,p}_f$) of each layer (k,p) is calculated using the principal direction stress ($[\sigma]^{k,p}_{1,2}$) and strength determination parameter ($[f]^{k,p}_{1,2}$) of the layer (k,p) (S24). For example, when applying the Tsai-Wu criterion, the safety factor is calculated as shown in the following Equation (13).

$$aS_f^2 + bS_f - 1 = 0$$

$$a = f_{11}\sigma_1^2 + f_{22}\sigma_2^2 + f_{66}\tau_6^2 + 2f_{12}\sigma_1\sigma_2$$

$$b = f_1\sigma_1 + f_2\sigma_2 \quad (13)$$

Solving the quadratic equation in Equation (12) yields two solutions for the safety factor ($S^{k,p}{}_f$) of each layer (k,p), where the positive value ($S^{k,p}{}_{fa}$) represents the tensile strength and the negative value ($S^{k,p}{}_{fr}$) represents the compressive strength. The layer (k,$p_i$) with the smallest safety factor among all layers (k,p) can be defined as the failure layer (S25).

In this case, the safety factor of the failure layer can be defined as the strength value ($[\bar{F}]^i{}_{x,y}$) for the corresponding loading cycle (i) (S26). In this case, if a unit normal stress was applied according to Equation (5) in the previous S17, the strength in the x-direction of the multilayer material is derived by Equation (14).

$$[\bar{F}]^i_{xt} = (S^{k_i}_{fa})_{min} \quad \text{Tensile strength}$$

$$[\bar{F}]^i_{xc} = (S^{k_i}_{fr})_{min} \quad \text{Compressive strength} \quad (14)$$

Additionally, if a unit normal stress was applied according to Equation (6) in the previous S17, the strength in the y-direction of the multilayer material is derived by Equation (15).

$$[\bar{F}]^i_{yt} = (S^{k_i}_{fa})_{min} \quad \text{Tensile strength}$$

$$[\bar{F}]^i_{yc} = (S^{k_i}_{fr})_{min} \quad \text{Compressive strength} \quad (15)$$

If the result of the corresponding loading cycle meets the predetermined ULF (Ultimate Laminate Failure) criteria (S27), the defined strength value ($[\bar{F}]^i{}_{x,y}$) is determined as the calculated strength value ($[\bar{F}]^u{}_{x,y}$) of the multilayer material (S28).

If the ULF criteria are not yet met, S29 and S30 are performed to reapply the entire algorithm cycle.

Here, the ULF criteria can be applied by selecting one of the following examples 1 to 3 (S27):

(Example 1) Loading cycle (i=1): When any one of the layers constituting the multilayer material reaches failure, the corresponding strength is selected as the final strength of the multilayer material.
(Example 2) Loading cycle (n cycles): When all layers (n layers) forming the multilayer material have completed failure, the corresponding strength is selected as the final strength of the multilayer material.
(Example 3) When comparing the results of the i-th loading cycle and the i+1-th loading cycle, if the corresponding strength does not increase, the strength selected in the i-th loading cycle is selected as the final strength.

If the strength value ($[\bar{F}]^i{}_{x,y}$) of the multilayer material defined in S26 does not meet the ULF criteria, the elastic modulus of the failure layer identified in the corresponding cycle (i) is adjusted and recalculated (S29). In this case, the elastic modulus of the failure layer is adjusted by applying a coefficient r. For example, when r=0, it is assumed that the failure layer in that cycle has lost its stress-bearing capacity in the corresponding direction for the next loading cycle. When $0<r<1$, it is assumed that the failure layer in that cycle has partially lost its stress-bearing capacity for the next loading cycle.

(Fourth embodiment)

FIG. 4 is a flowchart of a method for reverse engineering the strength of a multilayer material according to yet another embodiment of the present disclosure.

If the calculated strength value ($[\bar{F}]^u{}_{1,2}$) of the multilayer material is calculated, it is determined whether it falls within the error range of the predetermined target strength value ($[\bar{F}]^t{}_{1,2}$) of the multilayer material (S30).

If the calculated strength value ($[\bar{F}]^u{}_{1,2}$) of the multilayer material is outside the error range of the target strength value ($[\bar{F}]^t{}_{1,2}$) of the multilayer material, the calculated strength value ($[\bar{F}]^u{}_{1,2}$) is compared with the target strength value

($[\bar{F}]^t_{1,2}$) of the multilayer material.

If the calculated strength value ($[\bar{F}]^u_{1,2}$) of the multilayer material is smaller than the target strength value ($[\bar{F}]^t_{1,2}$) of the multilayer material, the principal stress direction strength value ($[F]^p_{1,2}$) of the amorphous layer is increased, and the calculated strength value ($[\bar{F}]^u_{1,2}$) of the multilayer material is recalculated (S31).

Conversely, if the calculated strength value ($[\bar{F}]^u_{1,2}$) of the multilayer material is larger than the target strength value ($[\bar{F}]^t_{1,2}$) of the multilayer material, the principal stress direction strength value ($[F]^p_{1,2}$) of the amorphous layer is decreased, and the calculated strength value ($[\bar{F}]^u_{1,2}$) of the multilayer material is recalculated (S32). However, if further decreasing the principal stress direction strength value ($[F]^p_{1,2}$) of the amorphous layer would result in a negative value, the calculated strength value ($[\bar{F}]^u_{1,2}$) of the multilayer material is not recalculated, and instead, the minimum value set in the program is assigned as the principal stress direction strength value ($[F]^p_{1,2}$) of the amorphous layer and output.

In the process of determining whether the calculated strength value ($[\bar{F}]^u_{1,2}$) of the multilayer material falls within the error range of the predetermined target strength value ($[\bar{F}]^t_{1,2}$) of the multilayer material S30, if the calculated strength value ($[\bar{F}]^u_{1,2}$) of the multilayer material falls within the error range of the target strength value ($[\bar{F}]^t_{1,2}$) of the multilayer material, the input principal stress direction strength value ($[F]^p_{1,2}$) of the amorphous layer (p) is presented as an appropriate value (S33).

(Fifth embodiment)

In yet another exemplary example of the present disclosure, when the input values to be entered into the input part cannot be directly obtained, they can be derived through a process of conversion using other material property values.

In one exemplary example, in the process of inputting the elastic modulus ($E^k$) and Poisson's ratio ($\upsilon^k$) of each layer (k), these can be calculated using one or more material property values among the first Lamé parameter ($\lambda^k$), shear modulus ($G^k$), and bulk modulus ($K^k$). For example, it is possible to convert to elastic modulus ($E^k$) and Poisson's ratio ($\upsilon^k$) using the following Mathematical Equations 1 to 9.

When the available combination is ($\lambda^k$, $G^k$), it follows Mathematical Equation 1 below.

[Mathematical Equation 1]

$$E^k = \frac{G^k(3\lambda^k + 2G^k)}{(\lambda^k + G^k)}, \qquad \upsilon^k = \frac{\lambda^k}{2(\lambda^k + G^k)}$$

When the available combination is ($\lambda^k$, $E^k$), it follows Mathematical Equation 2 below.

[Mathematical Equation 2]

$$\upsilon^k = \frac{A - (E^k + \lambda^k)}{4\lambda^k}, \qquad E^k$$

When the available combination is ($\lambda^k$, $\upsilon^k$), it follows Mathematical Equation 3 below.

[Mathematical Equation 3]

$$E^k = \frac{\lambda^k(1 + \lambda^k)(1 - 2\lambda^k)}{\lambda^k}, \qquad \upsilon^k$$

When the available combination is ($\lambda^k$, $K^k$), it follows Mathematical Equation 4 below.

[Mathematical Equation 4]

$$E^k = \frac{9K^k(K^k - \lambda^k)}{3K^k - \lambda^k}, \quad \upsilon^k = \frac{\lambda^k}{3K^k - \lambda^k}$$

When the available combination is ($G^k$, $E^k$), it follows Mathematical Equation 5 below.

[Mathematical Equation 5]

$$\upsilon^k = \frac{E - 2G}{2G^k}, \quad E^k$$

When the available combination is ($G^k$, $\upsilon^k$), it follows Mathematical Equation 6 below.

[Mathematical Equation 6]

$$E^k = 2G^k(1 + \upsilon^k), \quad \upsilon^k$$

When the available combination is ($G^k$, $K^k$), it follows Mathematical Equation 7 below.

[Mathematical Equation 7]

$$E^k = \frac{9K^k G^k}{3K^k + G^k}, \quad \upsilon^k = \frac{3K^k - 2G^k}{2(3K^k + G^k)}$$

When the available combination is ($K^k$, $E^k$), it follows Mathematical Equation 8 below.

[Mathematical Equation 8]

$$\upsilon^k = \frac{3K^k - E^k}{6K^k}, \quad E^k$$

When the available combination is ($K^k$, $\upsilon^k$), it follows Mathematical Equation 9 below.

[Mathematical Equation 9]

$$E^k = 3K^k(1 - 2\upsilon^k), \quad \upsilon^k$$

The above Mathematical Equations 1 to 9 are examples, and it is possible to combine two or more mathematical equations as needed.

[Description of Reference Numerals]

10: input part

20: control part
21: multilayer material property calculation unit
22: expansion coefficient and stress calculation unit
30: display
40: storage part

100: multilayer material

## Claims

1. A system for reverse engineering the strength of a multilayer material which stacked n layers including an amorphous layer (p), comprising:

an input part into which input values comprising the principal stress direction strength value ($[F]^k$) for each layer (k) except the amorphous layer (p), and the target strength value ($[\bar{F}]^t$) of the multilayer material are input;
a control part for calculating the strength of the multilayer material by applying the input values entered into the input part;
a display connected to the control part; and
a storage part connected to the control part,
wherein the control part,
derives a calculated strength value ($[\bar{F}]^u$) of the multilayer material using the principal stress direction strength value ($[F]^k$) of each layer (k) and an arbitrarily applied principal stress direction strength value ($[F]^p$) of the amorphous layer (p), and
determines whether the calculated strength value ($[\bar{F}]^u$) of the multilayer material falls within an error range of a predetermined target strength value ($[\bar{F}]^t$) of the multilayer material,
wherein, n is an integer of 2 or more, and p is an integer from 1 to n, and the sum of k and p is n.

2. The system for reverse engineering the strength of a multilayer material of claim 1, wherein the input values entered into the input part with respect to each layer (k) except the amorphous layer (p), further comprise any one or more among:

elastic modulus ($E^k$), Poisson's ratio ($\upsilon^k$), shear modulus ($G^k$), thickness ($Z^k$), and lamination angle ($\theta^k$) of each layer (k); and
the total thickness (h) of the multilayer material.

3. The system for reverse engineering the strength of a multilayer material of claim 1, wherein the control part:

calculates the stress of each layer (k,p),
transforms the stress of each layer (k,p) into the principal direction stress ($[\sigma]^{k,p}$) of each layer (k,p) by applying the lamination angle ($\theta^{k,p}$) of each layer (k,p),
configures the principal stress direction strength ($[F]^{k,p}$) of each layer (k,p) as a strength determination parameter ($[f]^{k,p}$) for determining the strength of the multilayer material,
calculates the safety factor ($S^{k,p}$) of each layer (k,p) by combining the principal direction stress ($[\sigma]^{k,p}$) and the strength determination parameter ($[f]^{k,p}$) of each layer (k,p), and
derives the calculated strength value ($[\bar{F}]^u$) of the multilayer material from the calculated safety factor ($S^{k,p}$) of each layer (k,p).

4. The system for reverse engineering the strength of a multilayer material of claim 3, wherein the control part:

calculates the force (/N) and moment (/M) of the multilayer material from the total thickness (h) of the multilayer material,
calculates the mid-plane strain ($\varepsilon^0$) and curvature (K) using the force (/N) and moment (/M) of the multilayer material and the inverse matrix ([a], [b], [c], [d]) of the stiffness matrix ([A], [B], [D]) of the multilayer material,
calculates the strain ($\varepsilon^{k,p}$) of each layer (k,p) using the mid-plane strain ($\varepsilon^0$), curvature (K), and thickness information ($Z^{k,p}$) of each layer (k,p), and
calculates the stress ($\sigma^{k,p}$) of each layer (k,p) using the strain ($\varepsilon^{k,p}{}_{x,y}$) of each layer (k,p) and the stiffness matrix ($[Q]^{k,p}$) of each layer (k,p).

**5.** The system for reverse engineering the strength of a multilayer material of claim 3, wherein deriving the calculated strength value ($[\overline{F}]^u$) of the multilayer material from the safety factor ($S^{k,p}$) of each layer (k,p) comprises:

extracting the smallest value ($(S^{k,p})_{min}$) among the calculated safety factors of each layer (k,p), wherein if the extracted smallest value ($(S^{k,p})_{min}$) meets the predetermined ULF (Ultimate Laminate Failure) criteria, it is defined as the calculated strength value ($[\overline{F}]^u$) of the multilayer material.

**6.** The system for reverse engineering the strength of a multilayer material of claim 1, wherein the process of determining whether the calculated strength value ($[\overline{F}]^u$) of the multilayer material falls within the error range of the target strength value ($[\overline{F}]^t$) of the multilayer material,
wherein if the calculated strength value ($[\overline{F}]^u$) of the multilayer material falls within the error range of the target strength value ($[\overline{F}]^t$) of the multilayer material, the principal stress direction strength value ($[F]^p$) of the amorphous layer is presented as an appropriate value.

**7.** The system for reverse engineering the strength of a multilayer material of claim 1, wherein the process of determining whether the calculated strength value ($[\overline{F}]^u$) of the multilayer material falls within the error range of the target strength value ($[\overline{F}]^t$) of the multilayer material,

wherein if the calculated strength value ($[\overline{F}]^u$) of the multilayer material is outside the error range of the target strength value ($[\overline{F}]^t$) of the multilayer material,
wherein if the calculated strength value ($[\overline{F}]^u$) of the multilayer material is smaller than the target strength value ($[\overline{F}]^t$) of the multilayer material, the principal stress direction strength value ($[F]^p$) of the amorphous layer (p) is increased, and the calculated strength value ($[\overline{F}]^u$) of the multilayer material is recalculated, and
wherein if the calculated strength value ($[\overline{F}]^u$) of the multilayer material is larger than the target strength value ($[\overline{F}]^t$) of the multilayer material, the principal stress direction strength value ($[F]^p$) of the amorphous layer (p) is decreased, and the calculated strength value ($[\overline{F}]^u$) of the multilayer material is recalculated.

**8.** A method for reverse engineering the strength of a multilayer material which stacked n layers including an amorphous layer (p), comprising:

inputting input values comprising the principal stress direction strength value ($[F]^k$) for each layer (k) except the amorphous layer (p) and the target strength value ($[\overline{F}]^t$) of the multilayer material;
calculating the strength value ($[\overline{F}]^u$) of the multilayer material using the input values entered into the input part and an arbitrarily applied principal stress direction strength value ($[F]^p$) for the amorphous layer (p); and
determining whether the calculated strength value ($[\overline{F}]^u$) of the multilayer material falls within an error range of a predetermined target strength value ($[\overline{F}]^t$) of the multilayer material,
wherein, n is an integer of 2 or more, and p is an integer from 1 to n, and the sum of k and p is n.

**9.** The method for reverse engineering the strength of a multilayer material of claim 8, wherein the inputting the input values,
the input values with respect to each layer (k) except the amorphous layer (p) comprise any one or more among:

elastic modulus ($E^k$), Poisson's ratio ($\upsilon^k$), shear modulus ($G^k$), thickness ($Z^k$), and lamination angle ($\theta^k$) of each layer (k); and
the total thickness (h) of the multilayer material.

**10.** The method for reverse engineering the strength of a multilayer material of claim 8, wherein the calculating the strength value ($[\overline{F}]u$) of the multilayer material comprises:

calculating the stress of each layer (k,p);
transforming the stress of each layer (k,p) into the principal direction stress ($[\sigma]^{k,p}$) of each layer (k,p) by applying the lamination angle ($\theta^{k,p}$) of each layer (k,p);
configuring the principal stress direction strength ($[F]^{k,p}$) of each layer (k,p) as a strength determination parameter ($[f]^{k,p}$) for determining the strength of the multilayer material;
calculating the safety factor ($S^{k,p}$) of each layer (k,p) by combining the principal direction stress ($[\sigma]^{k,p}$) and the strength determination parameter ($[f]^{k,p}$) of each layer (k,p); and
deriving the calculated strength value ($[\overline{F}]^u$) of the multilayer material from the calculated safety factor ($S^{k,p}$) of each layer (k,p).

**11.** The method for reverse engineering the strength of a multilayer material of claim 10, wherein the calculating the stress of each layer (k,p) comprises:

calculating the force (/N) and moment (/M) of the multilayer material from the total thickness (h) of the multilayer material;
calculating the mid-plane strain ($\varepsilon^0$) and curvature (K) using the force (/N) and moment (/M) of the multilayer material and the inverse matrix ([a], [b], [c], [d]) of the stiffness matrix ([A], [B], [D]) of the multilayer material;
calculating the strain ($\varepsilon^{k,p}$) of each layer (k,p) using the mid-plane strain ($\varepsilon^0$), curvature (K), and thickness information ($Z^{k,p}$) of each layer (k,p); and
calculating the stress ($\sigma^{k,p}$) of each layer (k,p) using the strain ($\varepsilon^{k,p}{}_{x,y}$) of each layer (k,p) and the stiffness matrix ($[Q]^{k,p}$) of each layer (k,p).

**12.** The method for reverse engineering the strength of a multilayer material of claim 10, wherein the deriving the calculated strength value ($[\bar{F}]^u$) of the multilayer material from the safety factor ($S^{k,p}$) of each layer (k,p) comprises:

extracting the smallest value ($(S^{k,p})_{min}$) among the calculated safety factors ($S^{k,p}$) of each layer (k,p); and
defining this as the calculated strength value ($[\bar{F}]^u$) of the multilayer material if the extracted smallest value ($(S^{k,p})_{min}$) meets the predetermined ULF (Ultimate Laminate Failure) criteria.

**13.** The method for reverse engineering the strength of a multilayer material of claim 8, wherein the determining whether the calculated strength value ($[\bar{F}]^u$) of the multilayer material falls within the error range of the predetermined target strength value ($[\bar{F}]^t$) of the multilayer material comprises:
providing the principal stress direction strength value ($[F]^p$) of the amorphous layer (p) as an appropriate value if the calculated strength value ($[\bar{F}]^u$) of the multilayer material falls within the error range of the target strength value ($[\bar{F}]^t$) of the multilayer material.

**14.** The method for reverse engineering the strength of a multilayer material of claim 8, wherein the determining whether the calculated strength value ($[\bar{F}]^u$) of the multilayer material falls within the error range of the predetermined target strength value ($[\bar{F}]^t$) of the multilayer material,

wherein if the calculated strength value ($[\bar{F}]^u$) of the multilayer material is outside the error range of the target strength value ($[\bar{F}]^t$) of the multilayer material,
wherein if the calculated strength value ($[\bar{F}]^u$) of the multilayer material is smaller than the target strength value ($[\bar{F}]^t$) of the multilayer material, the principal stress direction strength value ($[F]^p$) of the amorphous layer is increased, and the calculated strength value ($[\bar{F}]^u$) of the multilayer material is recalculated, and
wherein if the calculated strength value ($[\bar{F}]^u$) of the multilayer material is larger than the target strength value ($[\bar{F}]^t$) of the multilayer material, the principal stress direction strength value ($[F]^p$) of the amorphous layer is decreased, and the calculated strength value ($[\bar{F}]^u$) of the multilayer material is recalculated.

【FIG. 1】

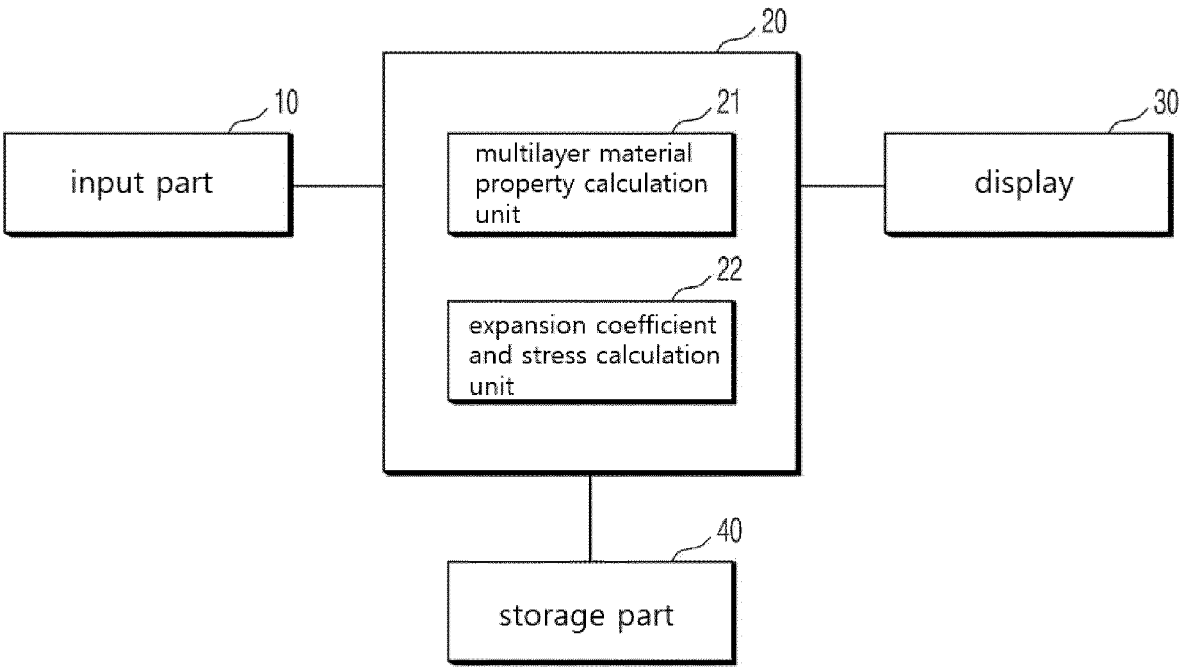
20
10
21
30
input part
multilayer material
property calculation
unit
display
22
expansion coefficient
and stress calculation
unit
40
storage part

【FIG. 2】

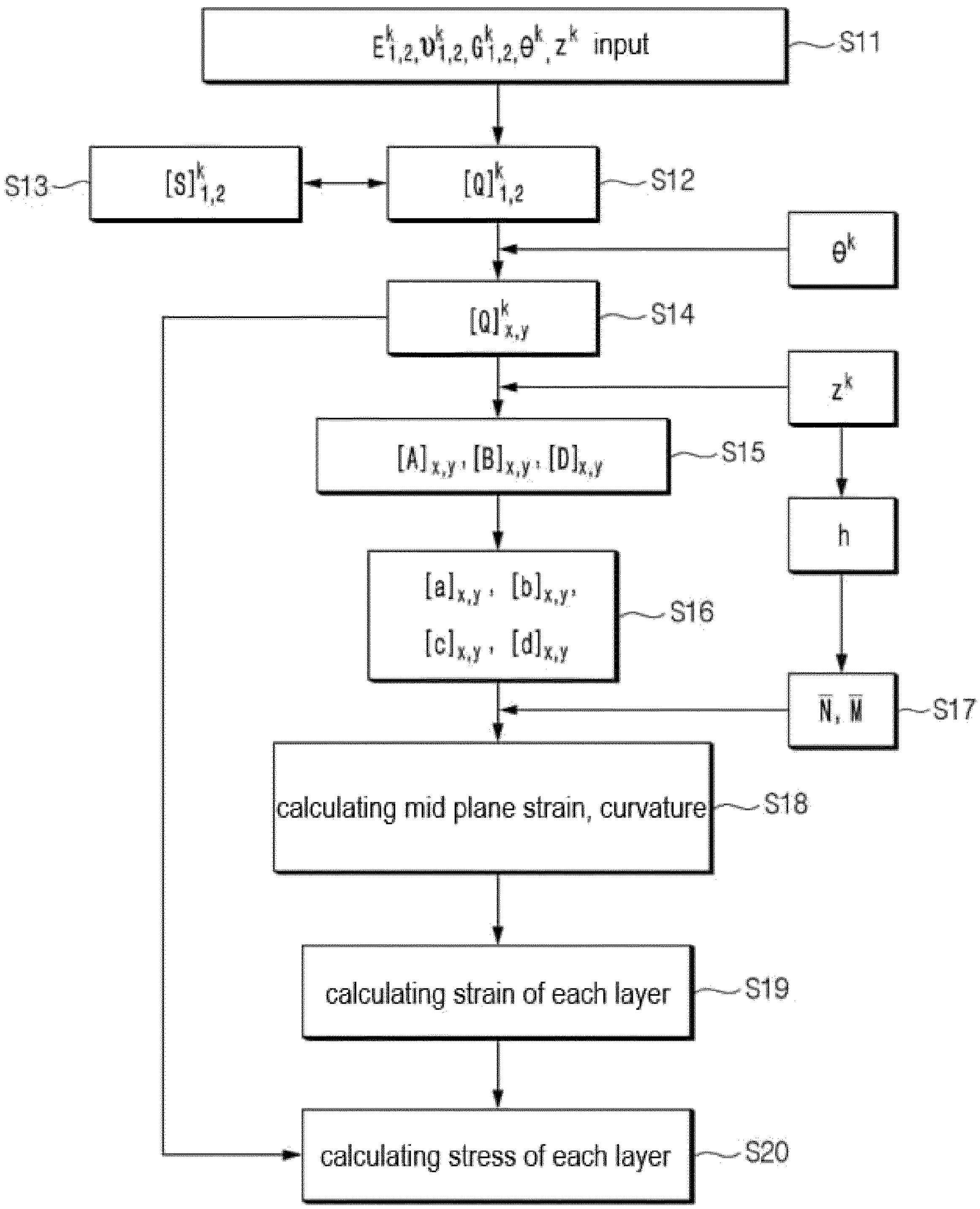
$E^k_{1,2}, \upsilon^k_{1,2}, G^k_{1,2}, \theta^k, z^k$ input
S11
$[S]^k_{1,2}$
S13
$[Q]^k_{1,2}$
S12
$\theta^k$
$[Q]^k_{x,y}$
S14
$z^k$
$[A]_{x,y}, [B]_{x,y}, [D]_{x,y}$
S15
h
$[a]_{x,y}, [b]_{x,y},$
$[c]_{x,y}, [d]_{x,y}$
S16
$\bar{N}, \bar{M}$
S17
calculating mid plane strain, curvature
S18
calculating strain of each layer
S19
calculating stress of each layer
S20

【FIG. 3】

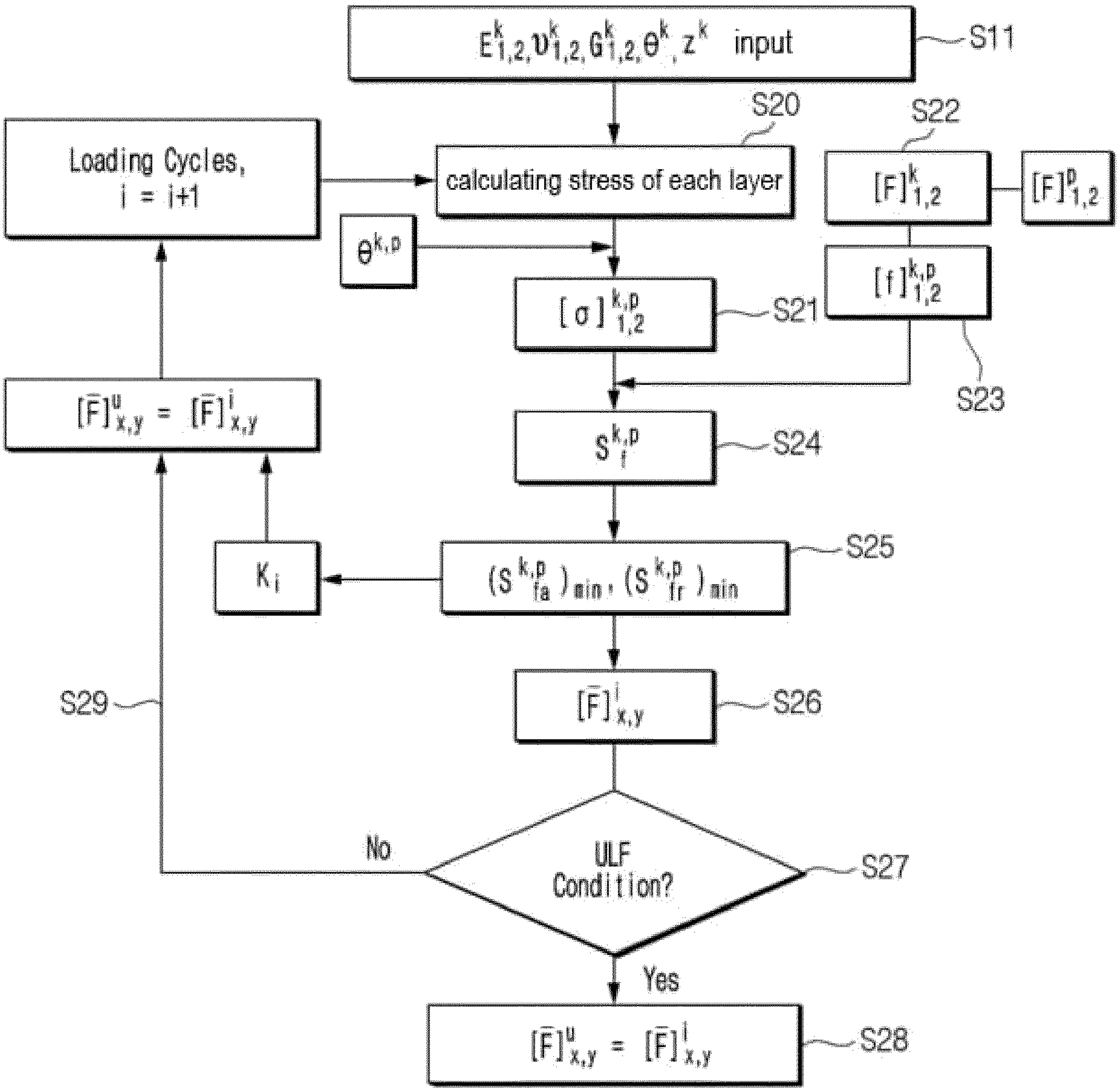
input
S11
S20
calculating stress of each layer
Loading Cycles,
i = i+1
S22
S21
S23
S24
S25
S26
S29
No
ULF
Condition?
S27
Yes
S28

【FIG. 4】

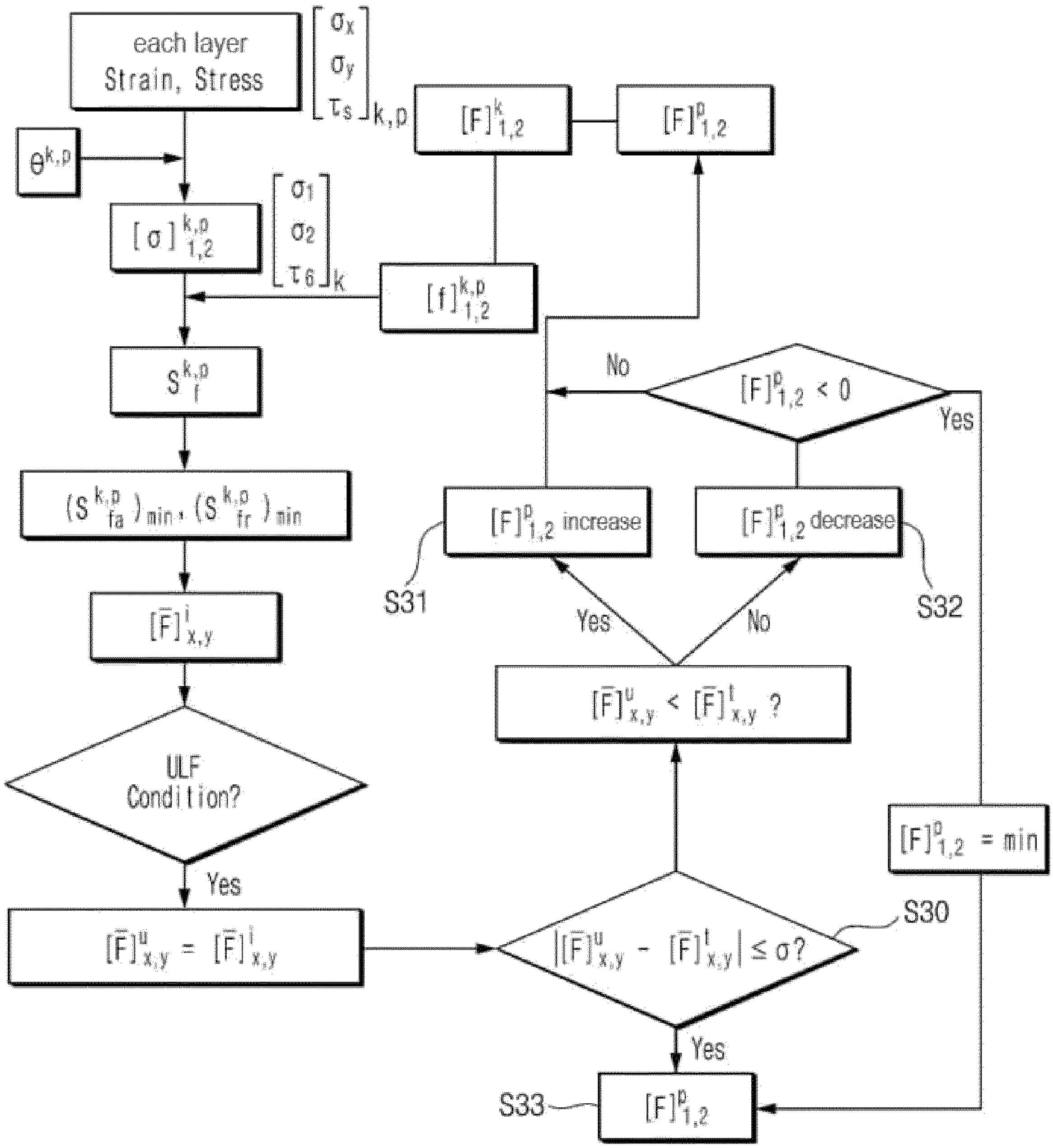
each layer
Strain, Stress
θ^k,p
[σ]^k,p_1,2
S^k,p_f
(S^k,p_fa)min, (S^k,p_fr)min
[F̄]^i_x,y
ULF
Condition?
Yes
[F̄]^u_x,y = [F̄]^i_x,y
[F]^k_1,2
[F]^p_1,2
[f]^k,p_1,2
No
[F]^p_1,2 < 0
Yes
[F]^p_1,2 increase
[F]^p_1,2 decrease
S31
S32
Yes
No
[F̄]^u_x,y < [F̄]^t_x,y ?
[F]^p_1,2 = min
S30
|[F̄]^u_x,y - [F̄]^t_x,y| ≤ σ?
Yes
S33
[F]^p_1,2

【FIG. 5】

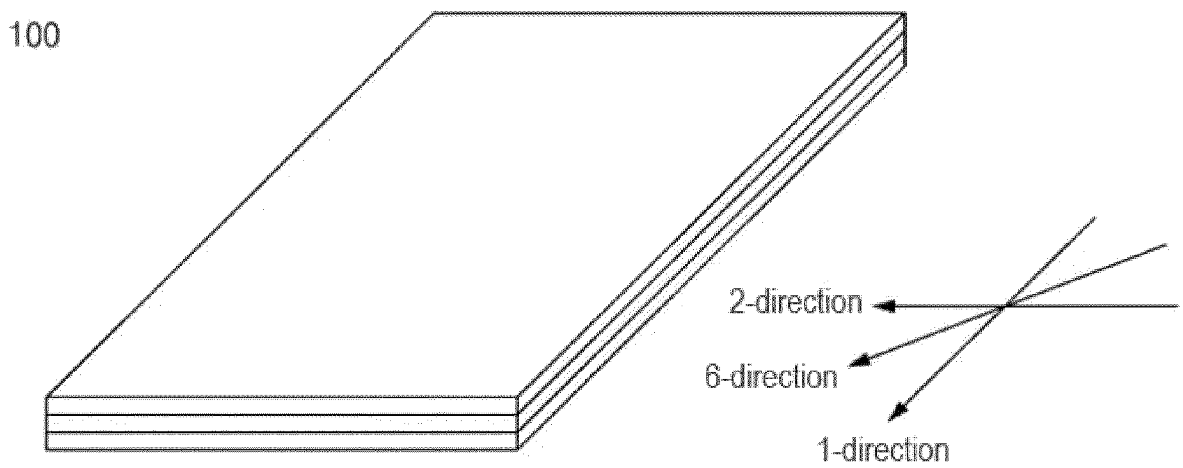

## INTERNATIONAL SEARCH REPORT

International application No.
**PCT/KR2024/009319**

**A. CLASSIFICATION OF SUBJECT MATTER**

**G06F 30/20**(2020.01)i; **G06F 111/10**(2020.01)i; **G06F 113/24**(2020.01)i; **G06F 119/14**(2020.01)i

According to International Patent Classification (IPC) or to both national classification and IPC

**B. FIELDS SEARCHED**

Minimum documentation searched (classification system followed by classification symbols)

G06F 30/20(2020.01); B29C 70/02(2006.01); G01N 3/06(2006.01); G01N 33/44(2006.01); G06F 17/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 미정층(undetermined layer), 다층(multi-layer), 강도(strength), 응력(stress), 강성 매트릭스(stiffness matrix), 방향(direction)

**C. DOCUMENTS CONSIDERED TO BE RELEVANT**

| Category* | Citation of document, with indication, where appropriate, of the relevant passages | Relevant to claim No. |
|---|---|---|
| A | CN 116368366 A (LG CHEM, LTD.) 30 June 2023 (2023-06-30)<br>See paragraphs [0035]-[0258]; claims 1-7; and figures 1-3. | 1-14 |
| DA | KR 10-2023-0033578 A (LG CHEM, LTD.) 08 March 2023 (2023-03-08)<br>See paragraphs [0108]-[0236]; claims 1-8; and figures 1-5. | 1-14 |
| A | JP 2004-110793 A (TOYOTA MOTOR CORP.) 08 April 2004 (2004-04-08)<br>See paragraphs [0016]-[0061]; claims 1-6; and figures 1, 3, 9 and 13-16. | 1-14 |
| A | KR 10-1780173 B1 (SABIC GLOBAL TECHNOLOGIES B.V.) 19 September 2017 (2017-09-19)<br>See paragraphs [0025]-[0105]; claims 1-10; and figures 3-4. | 1-14 |
| A | JP 2007-004552 A (TOYOTA MOTOR CORP. et al.) 11 January 2007 (2007-01-11)<br>See paragraphs [0018]-[0040]; claims 1-6; and figures 4 and 9. | 1-14 |

☐ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 September 2024** | **26 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/009319**

| Patent document cited in search report | Publication date (day/month/year) | Patent family member(s) | Publication date (day/month/year) |
|---|---|---|---|
| CN 116368366 A | 30 June 2023 | CN 116249886 A | 09 June 2023 |
| | | CN 116368365 A | 30 June 2023 |
| | | EP 4209773 A1 | 12 July 2023 |
| | | EP 4209774 A1 | 12 July 2023 |
| | | JP 2023-546423 A | 02 November 2023 |
| | | JP 2023-550883 A | 06 December 2023 |
| | | JP 7540856 B2 | 27 August 2024 |
| | | KR 10-2023-0055484 A | 26 April 2023 |
| | | KR 10-2023-0056575 A | 27 April 2023 |
| | | US 2023-0334195 A1 | 19 October 2023 |
| | | US 2023-0394193 A1 | 07 December 2023 |
| | | US 2024-0290438 A1 | 29 August 2024 |
| | | WO 2023-027444 A1 | 02 March 2023 |
| | | WO 2023-027445 A1 | 02 March 2023 |
| | | WO 2023-068520 A1 | 27 April 2023 |
| KR 10-2023-0033578 A | 08 March 2023 | CN 116368365 A | 30 June 2023 |
| | | CN 116368366 A | 30 June 2023 |
| | | EP 4209773 A1 | 12 July 2023 |
| | | EP 4209774 A1 | 12 July 2023 |
| | | JP 2023-546423 A | 02 November 2023 |
| | | JP 2023-550883 A | 06 December 2023 |
| | | KR 10-2023-0055484 A | 26 April 2023 |
| | | KR 10-2023-0056575 A | 27 April 2023 |
| | | US 2023-0334195 A1 | 19 October 2023 |
| | | US 2023-0394193 A1 | 07 December 2023 |
| | | US 2024-0290438 A1 | 29 August 2024 |
| | | WO 2023-027444 A1 | 02 March 2023 |
| | | WO 2023-027445 A1 | 02 March 2023 |
| | | WO 2023-068520 A1 | 27 April 2023 |
| JP 2004-110793 A | 08 April 2004 | JP 4179095 B2 | 12 November 2008 |
| KR 10-1780173 B1 | 19 September 2017 | CN 106796617 A | 31 May 2017 |
| | | CN 106796617 B | 25 September 2018 |
| | | EP 3180193 A1 | 21 June 2017 |
| | | JP 2018-156689 A | 04 October 2018 |
| | | JP 2018-503884 A | 08 February 2018 |
| | | JP 6356339 B2 | 11 July 2018 |
| | | US 2017-0371980 A1 | 28 December 2017 |
| | | WO 2017-027598 A1 | 16 February 2017 |
| JP 2007-004552 A | 11 January 2007 | JP 4459120 B2 | 28 April 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230085447
- KR 20220086176
- KR 20220086160
- KR 20220071405